# EUROPEAN PATENT APPLICATION

(11) **EP 2 055 377 A1**
(43) Date of publication of application: **06.05.2009**
(21) Application number: 07806567.9
(22) Date of filing: 27.08.2007
(51) Int. Cl.: B01J 20/06, B01J 20/34, B03C 1/00, C01G 49/00, C02F 1/28

(54) **MAGNETIC CHEMICAL ABSORBER, PROCESS FOR PRODUCING THE SAME, METHOD OF REGENERATING THE SAME, AND METHOD OF TREATING WASTE LIQUID**

(30) Priority: 25.08.2006 JP 2006229861
(71) Applicant: National University Corporation Nagoya University, Nagoya-shi, Aichi 464-8601 (JP)
(72) Inventor: OKIDO, Masazumi, NATIONAL UNIVERSITY CORPORATION NAGOYA UNIVERSITY, Nagoya-shi, Aichi 4648601 (JP); BANDO, Yoshiyuki, NATIONAL UNIVERSITY CORPORATION NAGOYA UNIVERSITY, Nagoya-shi, Aichi 4648601 (JP); ESKANDARPOUR, Akbar, NATIONAL UNIVERSITY CORPORATION NAGOYA UNIVERSITY, Nagoya-shi, Aichi 4648601 (JP); SASSA, Kensuke, NATIONAL UNIVERSITY CORPORATION NAGOYA UNIVERSITY, Nagoya-shi, Aichi 4648601 (JP); ASAI, Shigeo c/o Japan Science and Technology Agency Innovation Plaza Tokai, Nagoya-shi, Aichi 4570063 (JP)
(74) Representative: TBK-Patent
(86) International application number: PCT/JP2007/067094
(87) International publication number: WO 2008/023853

(57) **Abstract**

A magnetic chemical absorbent according to the present invention is provided with a composite, which is constituted of a core substance comprising magnetite fine particles and schwertmannite being precipitated around the core substance to chemically bond therewith. This magnetic chemical absorbent can be produced in a hydrolysis reaction step, in which crystal of schwertmannite is precipitated by means of hydrolysis reaction by heating a solution of ferric salt and thereafter adding a reactive substance thereto, by means of adding magnetite fine particles into the solution after the solution is heated and before the precipitation of the crystal begins.

This magnetic chemical absorbent is novel and good one whose absorption capability for harmful ion is upgraded more. In accordance with a waste-liquid treating method using this magnetic chemical substance, it is possible to intend the reduction of burdens in view of environmental and economic aspects. Moreover, this magnetic chemical absorbent is recyclable.

## Description

### TECHNICAL FIELD

The present invention relates to a magnetic chemical absorbent, a production process for the same and a recycling method for the same, as well as a waste-liquid treating method. A magnetic chemical absorbent according to the present invention, a production process for the same and a recycling method for the same, as well as a waste-liquid treating method according to it can be utilized suitably in the course of removing a harmful iron, such as chromium ion, phosphoric ion or fluoride ion, from a waste liquid that includes the harmful ion.

### BACKGROUND ART

Recently, for the strengthening of environmental control and its criteria, a waste-liquid disposal for removing a harmful ion, such as chromium ion, phosphoric ion or fluoride ion, from a waste liquid has been becoming an important study subject. And, in this waste-liquid disposal, the improvement of disposal efficiency and the reduction of disposal cost have been demanded strongly. In particular, since chromium ion has been used widely in chroming, such as electroplating, skin tanning, ferrochromium production, atomic power plant and weaving, the disposal including chromium ion has been becoming problems in a wide range of fields.

Chromium exists in the two oxide forms, the trivalent form and the hexavalent form. The toxicity of hexavalent chromium oxide is stronger as much as 500 times approximately than that of trivalent chromium oxide. The removal of this hexavalent chromium ion has been carried out by means of ion exchange, membrane filtration (biological absorption), reduction/precipitation/aggregation/filtration, chemical absorption, and the like. However, since difficulty is present in the method by means of reduction/precipitation/aggregation/filtration, and so forth, chemical absorption methods have been used exclusively for the removal of hexavalent chromium iron.

As a method of chemically absorbing harmful ion, such as chromium ion, a method of utilizing schwertmannite that serves as an anion-absorbing substance has been known (Patent Literature No. 1 (Japanese Unexamined Patent Publication (KOKAI) Gazette No. 2005-95, 732), and Patent Literature No.2 (Japanese Unexamined Patent Publication (KOKAI) Gazette No. 2005-875, for instance).

In Patent Literature No. 1, there is disclosed a method of adding schwertmannite with a composition formula Fe₈O₈(OH)₈₋₂ₓ(SO₄)ₓ (1≦x≦1.75) to polluted water that includes selenic ion and chromium ion, thereby letting this schwertmannite absorb the selenic ion and chromium ion.

Moreover, in Patent Literature No. 2, there is disclosed a method of removing selenic ion from acidic waste water that includes the arsenic ion by absorption by means of schwertmannite.

However, in the aforementioned conventional art that utilizes schwertmannite as a chemical absorbent for harmful ion, schwertmannite that has absorbed harmful ion has been subjected to solid-liquid separation by utilizing aggregation/deposition and filtration, thereby removing it from waste liquid. Since special facilities, such as a large-size deposition bath, are needed for solid-liquid separation like this, there have been heavy burdens in both environmental/economic aspects, such as construction area, facility investment and operating cost.

Moreover, the absorption capacities resulting from the aforementioned conventional schwertmmannites have not necessarily been fully satisfactory, either.

Note that, concerning chemical absorbents such as schwertmannite that are capable of absorbing harmful ion chemically, they are set forth in Japanese Unexamined Patent Publication (KOKAI) Gazette No. 2003-112,162, Japanese Unexamined Patent Publication (KOKAI) Gazette No. 2003-112,163, Japanese Unexamined Patent Publication (KOKAI) Gazette No. 2004-283,767, Japanese Unexamined Patent Publication (KOKAI) Gazette No. 2005-186,047, and Japanese Unexamined Patent Publication (KOKAI) Gazette No. 2004-358,396, and so on, as well.

### DISCLOSURE OF THE INVENTION

[Assignment to be Solved by the Invention]

The present invention is one which has been done in view of the aforementioned circumstances, and is one whose object is to provide a novel and good magnetic chemical absorbent which is capable of improving the absorption capacity of harmful ion more, a production process for that magnetic chemical absorbent, a waste-liquid treating method using that magnetic chemical absorbent, and a recycling method for that magnetic chemical absorbent.

Moreover, the present invention is one whose another object is to intend the reduction of burdens in view of environmental and economic aspects in waste-liquid treating system.

[Means for Solving the Assignment]

A magnetic chemical absorbent as set forth in claim 1 is one which is **characterized in that** it is provided with a composite being constituted of: a core substance comprising magnetite fine particles; and schwertmannite being precipitated around the core substance to chemically bond therewith.

In a suitable form of the magnetic chemical absorbent as set forth in claim 1, the magnetic characteristic of said composite can exhibit composite magnetism of ferromagnetism and paramagnetism.

Note herein that the "composite magnetism of ferromagnetism and paramagnetism" means that it turns into a magnetization curve that appears when ferromagnet and paramagnet are mixed and thereby it possesses both properties, ferromagnetism and paramagnetism, simultaneously.

In a suitable form of the magnetic chemical absorbent as set forth in claim 1 or 2, a mass ratio of said core substance with respect to the entirety of said composite can be 0.03-5%.

A production process for magnetic chemical absorbent as set forth in claim 4 is one which is provided with a hydrolysis reaction step, which includes: a heating step of heating a solution of ferric salt; and a precipitation step of precipitating crystal of schwertmannite by means of hydrolysis reaction by adding a reactive substance to the solution being heated, and which is **characterized in that** the crystal of schwertmannite is precipitated around the magnetite fine particles in the precipitation step by means of adding magnetite fine particles into said solution after said solution is heated at said heating step and before the precipitation of said crystal begins at said precipitation step, thereby obtaining a composite, which is constituted of a core substance comprising the magnetite fine particles and schwertmannite being precipitated around the core substance to chemically bond therewith.

In a suitable form of the production process for magnetic chemical absorbent as set forth in claim 4, an addition amount of said magnetite fine particles can be 0.03-5% in a mass ratio with respect to the entirety of said composite.

In a suitable form of the production process for magnetic chemical absorbent as set forth in claim 4 or 5, an average particle diameter of said magnetite fine particles can be 10-1,000 nm.

In a suitable form of the production process for magnetic chemical absorbent as set forth in either one of claims 4 through 6, said magnetite particles can be added into the solution at said precipitation step before a color change of said solution occurs.

A waste-liquid treating method as set forth in claim 8 is a waste-liquid treating method for removing at least one type of harmful ion, which can be absorbed by means of the magnetic chemical absorbent as set forth in claim 1 or 2, from a waste liquid including the harmful ion, and is one which is **characterized in that** it is provided with: an absorption step of adding said magnetic chemical absorbent to said waste liquid, thereby letting the magnetic chemical absorbent absorb said harmful ion chemically; and a separation step of magnetically separating said magnetic chemical absorbent, which has absorbed said harmful ion chemically, from said waste liquid.

In a suitable form of the waste-liquid treating method as set forth in claim 8, a pH of said waste liquid can be adjusted to 9 or less at said absorption step.

In a suitable form of the waste-liquid treating method as set forth in claim 8 or 9, said harmful ion can be at least one member being selected from the group consisting of ions that are harmful to human body or environment, or the like, such as chromium ion, phosphoric-acid-based ion (phosphoric ion, phosphite ion, and the like), fluoride ion, arsenic ion, selenic ion, antimonic ion and uranic ion, and the other heavy-metal ions.

In a suitable form of the waste-liquid treating method as set forth in either one of claims 8 through 10, said magnetic chemical absorbent that has absorbed said harmful ion can be separated magnetically by means of a magnetic field with 0.1-0.5 Tesla at said separation step.

In a suitable form of the waste-liquid treating method as set forth in either one of claims 8 through 11, said harmful ion can be absorbed onto said magnetic chemical absorbent in a fixation layer in which said waste liquid is in a fixation state at said absorption step.

In a suitable form of the waste-liquid treating method as set forth in either one of claims 8 through 11, said harmful ion can be absorbed onto said magnetic chemical absorbent in a fluidized layer in which said waste liquid is in a fluidized state at said absorption step.

In a suitable form of the waste-liquid treating method as set forth in either one of claims 8 through 13, said magnetic chemical absorbent that has absorbed said harmful ion can be subjected to solid-liquid separation in a fixation layer in which said waste liquid is in a fixation state at said separation step.

In a suitable form of the waste-liquid treating method as set forth in either one of claims 8 through 13, said magnetic chemical absorbent that has absorbed said harmful ion can be subjected to solid-liquid separation in a fluidized layer in which said waste liquid is in a fluidized state at said separation step.

A recycling method for magnetic chemical absorbent as set forth in claim 16 is one which is **characterized in that** the magnetic chemical absorbent, which has chemically absorbed at least one type of harmful ion that can be absorbed by means of the magnetic chemical absorbent as set forth in claim 1 or 2, is treated with a sulfuric-acid aqueous solution, thereby substituting sulfuric ion for the harmful ion that has been absorbed chemically onto the magnetic chemical absorbent.

In a suitable form of the recycling method for magnetic chemical absorbent as set forth in claim 16, a concentration of said sulfuric-acid aqueous solution can be 0.01-0.2 mol/L.

In a suitable form of the recycling method for magnetic chemical absorbent as set forth in claim 16 or 17, said harmful ion can be at least one member being selected from the group consisting of ions that are harmful to human body or environment, or the like, such as chromium ion, phosphoric-acid-based ion (phosphoric ion, phosphite ion, and the like), fluoride ion, arsenic ion, selenic ion, antimonic ion and uranic ion, and the other heavy-metal ions.

A magnetic chemical absorbent as set forth in claim 18 is one which is **characterized in that** it is provided with a composite being constituted of: a core substance comprising magnetite fine particles; and an iron-sulfate compound being precipitated around the core substance to chemically bond therewith.

In a suitable form of the magnetic chemical absorbent as set forth in claim 18, said iron-sulfate compound can be one member being selected from the group consisting of jarosite (jarosite, or iron-substituted alunite) and goethite (goethite, or xanthosiderite).

[Effect of the Invention]

A magnetic chemical absorbent that is directed to the present invention is a novel substance whose absorption capacity for chemically-absorbable harmful ion is improved, compared with that of a simple substance of schwertmannite (hereinafter referred to as "simple-substance schwertmannite") or that of a mixture of simple-substance schwertmannite and magnetite. Accordingly, by means of reduction in the usage amount of chemical absorbent, it becomes feasible to intend cost reduction in waste-liquid treating system.

Moreover, since the magnetic chemical absorbent that is directed to the present invention exhibits a characteristic of composite magnetism of ferromagnetism and paramagnetism when including magnetite fine particles with predetermined particle diameters in a predetermined amount, it is possible to separate it magnetically with ease. Consequently, it is possible to keep down the construction area and operating cost and the like for solid-liquid separation facilities considerably, and thereby it becomes feasible to intend the reduction of burdens in view of environmental and economic aspects in waste-liquid treating system.

Furthermore, in the magnetic chemical absorbent that is directed to the present invention, it is possible to magnetically separate it easily even when its magnetite content is less considerably compared with a magnetite amount that is added as an auxiliary additive (magnetic species) in order to magnetically separate conventional schwertmannite. Therefore, the usage amount of magnetite is kept down, and thereby it becomes feasible to intend cost reduction.

In addition to above, the magnetic chemical absorbent that is directed to the present invention can be recycled by means of treating it with a sulfuric-acid aqueous solution after it has absorbed harmful ion, without ever lowering the absorption capability virtually. Therefore, it becomes feasible to use the magnetic chemical absorbent that is directed to the present invention repeatedly, and thereby it is possible to intend cost reduction by means of reduction in the usage amount of chemical absorbent.

Hence, in accordance with the present invention, it becomes feasible to absorb harmful ion onto the magnetic chemical absorbent with absorption capacity that is higher than those of conventional ones, and additionally it becomes feasible to intend the reduction of burdens in view of environmental and economic aspects in waste-liquid treating system.

### BRIEF DESCRIPTION OF THE DRAWINGS

Fig. 1 is an SEM photograph for showing a superficial form of a magnetic chemical absorbent that was obtained in Example No. 1.

Fig. 2 is an SEM photograph for showing a superficial form of simple-substance schwertmannite that was obtained in Comparative Example No. 1.

Fig. 3 is a diagram for exhibiting the results of carrying out an XRD analysis on the magnetic chemical absorbent that is directed to Example No. 1, and on the simple-substance schwertmannite that is directed to Comparative Example No. 1.

Fig. 4 is a diagram for exhibiting the results of examining magnetization curves on the magnetic chemical absorbent that is directed to Example No. 1, and on the simple-substance schwertmannite that is directed to Comparative Example No. 1.

Fig. 5 is a diagram for exhibiting the results of measuring "Zeta" potentials (or superficial potentials) on the magnetic chemical absorbent that is directed to Example No. 1, and on the simple-substance schwertmannite that is directed to Comparative Example No. 1.

Fig. 6 is a diagram for exhibiting the results of examining the relationship between initial Cr concentration of waste liquid and Cr absorption on the magnetic chemical absorbent that is directed to Example No. 1.

Fig. 7 is a diagram for exhibiting the results of examining the relationship between initial P concentration of waste liquid and P absorption on the magnetic chemical absorbent that is directed to Example No. 1.

Fig. 8 is a diagram for exhibiting the results of examining the relationship between initial F concentration of waste liquid and F absorption on the magnetic chemical absorbent that is directed to Example No. 1.

Fig. 9 is a diagram for exhibiting the results of examining the influence of pH that was exerted upon Cr absorption on the magnetic chemical absorbent that is directed to Example No. 1.

Fig. 10 is a diagram for exhibiting the results of examining the relationship between initial P concentration of waste liquid and P absorption on the magnetic chemical absorbent that is directed to Example No. 1, on the simple-substance schwertmannite that is directed to Comparative Example No. 1, and on a mixture of simple-substance schwertmannite and magnetite powder that is directed to Comparative Example No. 2.

Fig. 11 is a diagram for exhibiting the results of examining the relationship between initial F concentration of waste liquid and F absorption on the magnetic chemical absorbent that is directed to Example No. 1, and on the simple-substance schwertmannite that is directed to Comparative Example No. 1.

Fig. 12 is a photograph for exhibiting that the magnetic chemical absorbent that was obtained in Example No. 1 possessed the quality of ferromagnetism.

Fig. 13 is a photograph for exhibiting that the simple-substance schwertmannite that was obtained in Comparative Example No. 1 was not attracted to a permanent magnet at all.

Fig. 14 is an explanatory diagram for schematically illustrating an experimental devise for magnetically separating the magnetic chemical absorbent that is directed to Example No. 1.

[Explanation on Reference Numerals]

1 ··· Magnetic Field 2 ··· Glass Tube
3 ··· Magnetic Filter

### Best Mode for Carrying Out the Invention

A magnetic chemical absorbent that is directed to the present invention is provided with a composite, which is constituted of a core substance comprising magnetite (or magnetic iron ore Fe₃O₄) fine particles and schwertmannite being precipitated around this core substance to chemically bond therewith.

Said magnetite fine particles can suitably be one that has particle diameters on nano scale approximately. Concretely speaking, it is more preferable that an average particle diameter of the magnetite fine particles can be 10-1,000 nm. When the particles diameters of the magnetite fine particles are too large, the chemical characteristics of the resulting magnetic chemical absorbent have been lost. On the other hand, when the particle diameters of the magnetite fine particles are too small, the magnetic characteristic of the resulting composite does not become composite magnetism of ferromagnetism and paramagnetism so that it becomes kept being paramagnetic as it has been, and thereby the magnetic separation becomes difficult.

In said schwertmannite, schwertmannite that is stabilized by means of adsorption of phosphoric acid and the like, for example, phosphoric-acid adsorbed schwertmannite that is exhibited with a composition formula Fe₈O₈(OH)₈₋₂ₓ((SO₄)ₐ, (HPO₄)_{b})ₓ· nH₂O (a+b=x, 1 ≦x≦1.75, 0<a≦1.658, and 0.092≦b≦x) is included, in addition to the schwertmannite that is exhibited with a composition formula Fe₈O₈(OH)₈₋₂ₓ(SO₄)ₓ (1≦x≦1.75).

A form of said composite is not limited in particular, and can be adapted into molded bodies, and the like, in addition to powdery shapes and aggregated shapes; however, it can be adapted into a powder shape from the view point of enhancing the absorption capability more. Moreover, in the case of adapting it into a powdery shape, it is preferable to set an average particle diameter to be 1-100 µm approximately, and it is more preferable to set it to be 5-20 µm approximately. When the particle diameters of the composite at the time of adapting it into a powdery shape is too large, the absorption capacity of the resulting magnetic chemical absorbent lowers because the specific surface area decreases; when they are too small, the capture by means of magnetic filter becomes hard.

It is preferable to adapt a mass ratio of said core substance in said composite into being 0.03-5% with respect to the entire composite, and it is more preferable to adapt it into being 0.3-0.5%. When the mass ratio of the core substance is too high, not only the magnetite usage amount becomes enormous but also the chemical characteristics of the resulting magnetic chemical absorbent have been lost. On the other hand, when the mass ratio of the core substance is too low, the magnetic characteristic of the resulting composite does not become composite magnetism of ferromagnetism and paramagnetism so that it becomes kept being paramagnetic as it has been, and thereby the magnetic separation becomes difficult.

And, in the magnetic chemical absorbent that is directed to the present invention, the magnetic characteristic turns into composite magnetism of ferromagnetism and paramagnetism, and thereby the magnetic separation becomes feasible, even though the mass ratio of the core substance (or magnetite fine particles) with respect to the entire composite is as extremely low as 0.03-5%. Accordingly, it is possible to sharply reduce the usage amount of the magnetite fine particles that are required for carrying out the magnetic separation.

Although the simple-substance schwertmannite is a paramagnetic substance, the magnetic characteristic comes to exhibit composite magnetism of ferromagnetism and paramagnetism in the case where said composite includes the magnetite fine particles with predetermined particle diameters in a predetermined amount as the core substance. Consequently, the magnetic chemical absorbent that is directed to the present invention can readily undergo solid-liquid separation by utilizing magnetic separation in the case where said composite includes the magnetite fine particles with predetermined particle diameters in a predetermined amount.

Moreover, as can be seen from an SEM (scanning electron microscope) photograph in a later-described example, a superficial form of said composite does not turn into an acicular superficial structure as can be observed in the superficial form of simple-substance schwertmannite, and the acicular superficial structure has been lost. In said composite that has a superficial form from which said acicular superficial structure has been lost by means of being composited with the magnetite fine particles, it is believed that the absorption capacity for harmful ion has improved under the influence of this change of superficial form.

The magnetic chemical absorbent that is directed to the present invention comprising such a construction is a novel substance whose absorption capacity for chemically-absorbable harmful ion is improved compared with that of simple-substance schwertmannite, or that of a mixture of simple-substance schwertmannite and magnetite powder. Although the reason for this improved absorption capacity of the magnetic chemical absorbent has not necessarily been apparent yet, it is believed as follows: a certain chemical action is applied to schwertmannite by means of the fact that crystals precipitate around the magnetite fine particles serving as the core substance to bond with the magnetite fine particles chemically; and the harmful-ion absorption capacity of the schwertmannite has improved as a result thereof. Consequently, in accordance with the present invention, it becomes feasible to intend cost reduction in waste-liquid treating system by means of reduction in the usage amount of the magnetic chemical absorbent.

Moreover, since the magnetic chemical absorbent that is directed to the present invention exhibits a characteristic of composite magnetism of ferromagnetism and paramagnetism in the case of including the magnetite fine particles with predetermined particle diameters in a predetermined amount, it can be separatedmagnetically with ease. Since nolarge-sizedfacilities,such asdeposition bath, are needed for this magnetic separation, it is possible to keep down the construction area and operating cost and the like for solid-liquid separation facilities considerably, and thereby it becomes feasible to intend the reduction of burdens in view of environmental and economic aspects in waste-liquid treating system.

Furthermore, in the course of subjecting simple-substance schwertmannite that has absorbed harmful ion to solid-liquid separation to remove it from a waste liquid, although it is possible to carry out magnetic separation when adding a magnetite powder as an auxiliary additive (or magnetic species) into that waste liquid, for instance, a large amount of the magnetite powder serving as a magnetic species is required in this case. In view of this, in the magnetic chemical absorbent that is directed to the present invention, it is possible to carry out magnetic separation even though the magnetite content is less considerably compared with the magnetite amount to be added as a magnetic species. Therefore, it is possible to keep down the usage amount of magnetite, and thereby it is possible to intent cost reduction.

In addition to above, the magnetic chemical absorbent that is directed to the present invention can be recycled by means of treating it with a sulfuric-acid aqueous solution after it has absorbed harmful ion, without ever lowering the absorption capability virtually. Therefore, it becomes feasible to use the magnetic chemical absorbent that is directed to the present invention repeatedly, and thereby it is possible to intend cost reduction by means of reduction in the usage amount of chemical absorbent.

Hence, in accordance with the waste-liquid treating method that is directed to the present invention which carries out solid-liquid separation by using the magnetic chemical absorbent that is directed to the present invention and additionally utilizing magnetic separation, it becomes feasible to absorb harmful ion onto the magnetic chemical absorbent with absorption capacity that is higher than those of conventional ones, and additionally it becomes feasible to intend the reduction of burdens in view of environmental and economic aspects in waste-liquid treating system.

The magnetic chemical absorbent that is directed to the present invention can be produced by means of a production process for magnetic chemical absorbent, production process which is directed to the present invention and is specified hereinafter.

A production process for magnetic chemical absorbent that is directed to the present invention is provided with a hydrolysis reaction step, which includes a heating step and a precipitation step.

At said heating step, a solution of ferric salt is heated to and within a predetermined temperature range. As for the ferric salt, it is possible to use FeCl₃ (ferric chloride), Fe₂(SO₄)₃· nH₂O, or the like, suitably. As for said predetermined temperature range, it is preferable to adapt it into being 60-90 °C. When the heating temperature in the heating step deviates from within the range of 60-90 °C, the precipitation of schwertmannite becomes difficult.

At said precipitation step, the crystal of schwertmannite is precipitated by means of hydrolysis reaction by adding a reactive substance to said solution that has been heated at said heating step so that it is put within the predetermined temperature range. As for the reactive substance, it is possible to use a solution of Na₂SO₄ suitably in the case of using FeCl₃ as ferric salt at said heating step, and it is possible to use urea suitably in the case of using Fe₂(SO)₃· nH₂O as ferric salt at said heating step.

And, in the production process for magnetic chemical absorbent that is directed to the present invention, magnetite fine particles are added into said solution after said solution is heated to and within said predetermined temperature range at said heating step and before the precipitation of said crystal begins at said precipitation step. Thus, the crystal of schwertmannite is precipitated around the magnetite fine particles in the precipitation step, and thereby it is possible to obtain a composite, which is constituted of a core substance comprising the magnetite fine particles and schwertmannite being precipitated around the core substance to chemically bond therewith.

Note herein that, when the addition timing of the magnetite fine particles deviates from the one that has been described above, it is not possible to obtain said composite satisfactorily.

Moreover, in said precipitation step, since a color change of said solution occurs when the first crystal of schwertmannite precipitates, it is allowable to add the magnetite fine particles into the solution before a color change of the solution occurs.

Note that the end of the hydrolysis reaction in said precipitation step, namely, the completion of the precipitation of schwertmannite can be confirmed by means of the fact that the amount of the solution decreases from the initial amount to a half thereof approximately by means of evaporation, for instance.

Moreover, after said precipitation step, a solid-phase portion, which has undergone solid-liquid separation, can be adapted into the magnetic chemical absorbent that is directed to the present invention by washing it, thereafter drying it at 40-60 °C approximately, and then pulverizing it, if need arises.

It is preferable that an addition amount of said magnetite fine particles can be adapted into being 0.03-5% in a mass ratio with respect to the entirety of said composite, and it is more preferable that it can be adapted into being 0.3-0.5%.

Moreover, it is preferable that particles diameters of said magnetite fine particles can be adapted into being on nano scale approximately. Concretely speaking, it is preferable that an average diameter of the magnetite fine particles to be added can be adapted into being 10-1,000 nm, and it is more preferable that it can be adapted into being 20-100 nm.

It is possible to utilize the magnetic chemical absorbent that is direct to the present invention suitably for a waste-liquid treating method or waste-liquid treating system that removes at least one type of harmful ion, which can be absorbed by means of this magnetic chemical absorbent, from a waste liquid including the harmful ion.

As for the harmful ion, which can be absorbed by means of the magnetic chemical absorbent that is directed to the present invention, it is possible to name at least one member being selected from the group consisting of ions that are harmful to human body or environment, or the like, such as chromium ion (trivalent chromate ion, and hexavalent chromate ion), phosphoric-acid-based ion (phosphoric ion, phosphite ion, and the like), fluoride ion, arsenic ion, selenic ion, antimonic ion and uranic ion, and the other heavy-metal ions.

Said waste-liquid treating method is provided with an absorption step, and a separation step. Moreover, the waste-liquid treating system is provided with an absorption stage, and a separation stage.

In said absorption step or said absorption stage, it is allowable that said harmful ion can be absorbed onto the magnetic chemical absorbent in a fixation layer in which the waste liquid is in a fixation state, or it is allowable that said harmful ion can be absorbed onto the magnetic chemical absorbent in a fluidized layer in which the waste liquid is in a fluidized state.

Likewise, in said separation step or said separation stage, it is allowable that the magnetic chemical absorbent that has absorbed the harmful ion can be subjected to solid-liquid separation in a fixation layer in which the waste liquid is in a fixation state, or it allowable that the magnetic chemical absorbent that has absorbed the harmful ion can be subjected to solid-liquid separation in a fluidized layer in which the waste liquid is in a fluidized state.

In said absorption step or said absorption stage, it is preferable that a pH of said waste liquid can be adjusted to 9 or less from the viewpoint of enhancing the absorption capacity of the magnetic chemical absorbent, and it is more preferable that a pH of said waste liquid can be adjusted to 7 approximately.

Moreover, in said separation step or said separation stage, although a method of subjecting the magnetic chemical absorbent that has absorbed harmful ion to solid-liquid separation to separate it from the waste-liquid is not limited in particular, it is possible to utilize magnetic separation suitably.

Specifically, at the separation step in the waste-liquid treating method that is directed to the present invention, that is, the separation step serving as a suitable usage for the magnetic chemical absorbent that is directed to the present invention, said magnetic chemical absorbent that has absorbed said harmful ion chemically is separated from said waste liquid magnetically.

In this magnetic separation, it is possible to magnetically separate the magnetic chemical absorbent that has absorbed the harmful ion even by means of a comparatively weak magnetic field with 0.1-0.5 Tesla approximately, in the case where the magnetic chemical absorbent that is directed to the present invention is one which exhibits composite magnetism of ferromagnetism and paramagnetism.

Furthermore, the magnetic chemical absorbent that is directed to the present invention can be recycled by means of treating it with a sulfuric-acid aqueous solution after it has absorbed harmful ion.

Specifically, it is possible to satisfactorily recycle the magnetic chemical absorbent that is directed to the present invention by substituting sulfuric ion for harmful ion, which has been chemically absorbed onto the magnetic chemical absorbent, by means of treating it with a sulfuric-acid aqueous solution after it has absorbed the harmful ion.

It is preferable to adapt a concentration of the sulfuric-acid aqueous solution that is used in this recycling method into being 0.01-0.2 mol/L, and it is more preferable to adapt it into being 0.02-0.08 mol/L. When the concentration of the sulfuric-acid aqueous solution is too low, the substitution of harmful ion by means of sulfuric ion becomes insufficient, and thereby the absorption capacity in the magnetic chemical absorbent after recycling has degraded. On the other hand, when the concentration of the sulfuric-acid aqueous solution is too high, the magnetic chemical absorbent has been destroyed.

Note herein that, as a chemical absorbent that is capable of chemically absorbing harmful ion such as arsenic ion, jarosite, goethite, and the like, have been known in addition to the schwertmannite (see Japanese Unexamined Patent Publication (KOKAI) Gazette No. 2003-112,162, Japanese Unexamined Patent Publication (KOKAI) Gazette No. 2003-112,163, and so forth). The jarosite, goethite, and so on, are iron-sulfate compounds, like the schwertmannite. Consequently, in the magnetic chemical absorbent according to the present invention, it is believed that similar operations/effects can be demonstrated when employing an iron-sulfate compound, such as jarosite or goethite, instead of the schwertmannite.

Specifically, it is allowable that the magnetic chemical absorbent can even be one which is provided with a composite that is constitutedof a core substance comprisingmagnetite fine particles and an iron-sulfate compound being precipitated around the core substance to chemically bond therewith. As for this iron-sulfate compound, it is preferable to adapt it into one member that is selected from the group consisting of jarosite and goethite.

[Examples]

Hereinafter, the present invention will be explained more concretely by means of examples.

(Example No. 1)

A magnetic chemical absorbent was produced by means of a production process that will be specified hereinafter.

First of all, by means of slowly adding a diluted ammonia aqueous solution to a mixture of ferrous chloride (FeCl₂) and ferric chloride (FeCl₃) (a molar ratio of FeCl₂:FeCl₃ was 1:2) and then adjusting them to pH=8, magnetite fine particles whose average particle diameter was 10-100 nm approximately were deposited. And, the magnetite fine particles were subjected to solid-liquid separation by means magnetic separation, and were thereafter washed several times until a pH became 7, thereby making the magnetite fine particles ready.

Next, an aqueous solution, which was obtained by dissolving about 25-g Fe₂(SO₄)₃· 5H₂O into 500-mL distilled water, was heated to 60 °C, and was then stirred slowly for 10 minutes (a heating step).

And, into said aqueous solution whose temperature was held at 60°C, a slurry in which saidmagnetite fine particles were suspended in an amount of 3 g in 1, 000-mL distilled water was added in an amount of 10 mL, and thereafter 5-mol/L urea aqueous solution serving as a reactive substance was dropped in an amount of 500 mL into this aqueous solution in such a state that the temperature was held at 60 °C while taking 2-4 hours of time therefor, and thereby crystals of schwertmannite were precipitated by means of hydrolysis reaction (a precipitation step).

Note that, at this precipitation step, the color of said aqueous solution changed from red to brownish yellow when the first crystals of schwertmannite were precipitated. Moreover, the hydrolysis reaction was kept on going until said aqueous solution became a half from the initial amount by means of evaporation.

Thereafter, solid-phase portions that were obtained by carrying out solid-liquid separation were washed to remove impurities, were then dried at 40 °C, and were thereafter pulverized, thereby turning them into a powdery shape whose average particle diameter (average of later-described secondary particle diameters) was 12 µm.

Thus, a powder-shaped magnetic chemical absorbent that is directed to Example No. 1 was manufactured, powder-shaped magnetic chemical absorbent, which comprises a composite that is constituted of a core substance comprising the magnetite fine particles and schwertmannite being precipitated around this core substance to chemically bond therewith.

Note herein that, in the powder-shaped magnetic chemical absorbent that is directed to Example No. 1, a mass ratio of the core substance with respect to the entire composite was 0.3%.

(Comparative Example No. 1)

Except that no magnetite fine particles were added, simple-substance schwertmannite that was directed to Comparative Example No. 1 was produced in the same manner as Example No.1, simple-substance schwertmannite which had a powdery shape whose average particle diameter was 6 µm.

(Comparative Example No. 2)

A mixture of the simple-substance schwertmannite, which was obtained in Comparative Example No. 1, and a magnetite powder whose average particle diameter was 0.1 µm was obtained.

Note herein that a mass ratio of the magnetite powder with respect to the entirety of this mixture was 0.4%.

(Evaluation No. 1)

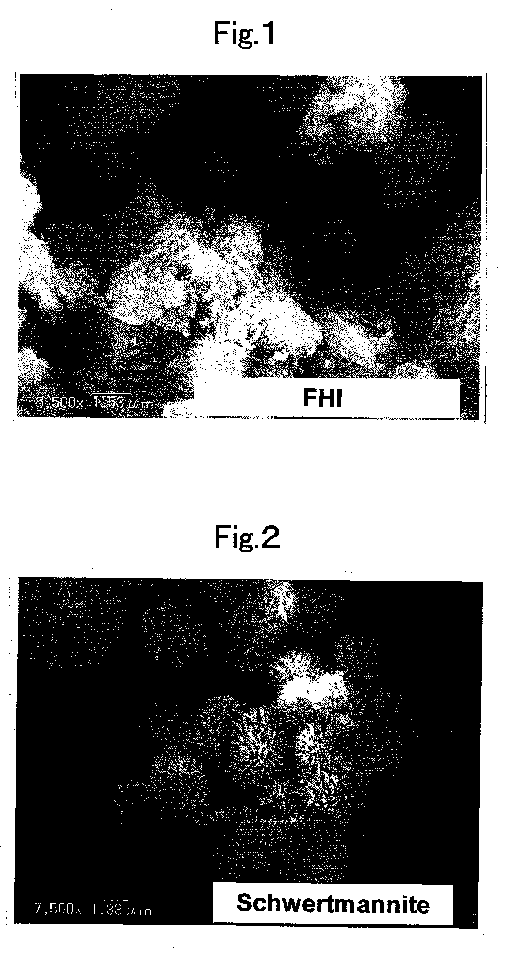

An SEM photograph for showing a superficial form of the magnetic chemical absorbent that was obtained in Example No. 1 is exhibited in Fig. 1, and an SEM photograph for showing a superficial form of the simple-substance schwertmannite that was obtained in Comparative Example No. 1 is exhibited in Fig. 2.

As exhibited in Fig. 2, the simple-substance schwertmannite that is directed to Comparative Example No. 2 had a large number of prongs on the particulate surface. On the other hand, as exhibited in Fig. 1, no prong was present on the particulate surface of the magnetic chemical absorbent that is directed to Example No. 1. Moreover, the magnetic chemical absorbent that is directed to Example No. 1 was one in which substantially-sphere-shaped particles that possessed primary particle diameters of 1-3 µm were united, and its secondary particle diameters were 8-15 µm.

Therefore, it was ascertained that the magnetic chemical absorbent that is directed to Example No. 1 was one whose superficial form was different from that of the simple-substance schwertmannite that is directed to Comparative Example No. 1.

(Evaluation No. 2)

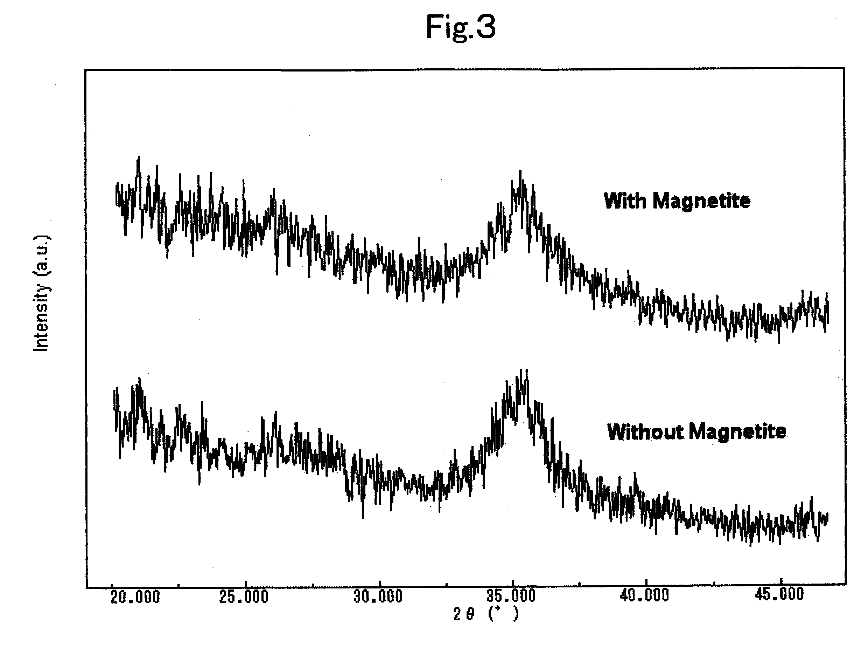

Results of subjecting the magnetic chemical absorbent that is directed to Example No. 1 and the simple-substance schwertmannite that is directed to Comparative Example No. 1 to an XRD analysis by means of X-ray diffraction instrument are illustrated in Fig. 3. Note that, in Fig. 3, one that is labeled with "With Magnetite" is the result of the XRD analysis on the magnetic chemical absorbent that is directed to Example No. 1, and another one that is labeled with "Without Magnetite" is the result of the XRD analysis on the simple-substance schwertmannite that is directed to Comparative Example No. 1.

As can be seen from Fig. 3, any difference was hardly present between the magnetic chemical absorbent that is directed to Example No. 1 and the simple-substance schwertmannite that is directed to Comparative Example No. 1 in the results of the XRD analysis. It is believed that this was because of the facts that the particle diameters of the magnetite fine particles that were added in Example No. 1 were small, and that the addition amount was less.

(Evaluation No. 3)

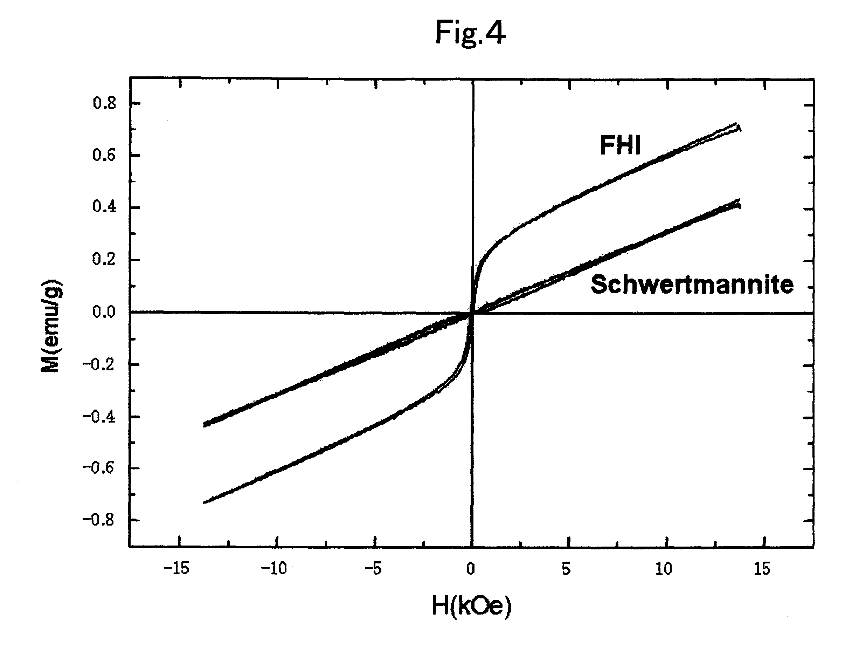

Results of examining magnetization curves by means of vibrational-type magnetometor for the magnetic chemical absorbent that is directed to Example No. 1 and the simple-substance schwertmannite that is directed to Comparative Example No. 1 are illustrated in Fig. 4. Note that, in Fig. 4, one that is labeled with "FHI" is the magnetization curve of the magnetic chemical absorbent that is directed to Example No. 1, and another one that is labeled with "Schwertmannite" is the magnetization curve of the simple-substance schwertmannite that is directed to Comparative Example No. 1.

It is understood from the magnetization curves in Fig. 4 that the simple-substance schwertmannite that is directed to Comparative Example No. 1 was paramagnet, whereas the magnetic chemical absorbent that is directed to Example No. 1 was one that exhibited composite magnetism of ferromagnetism and paramagnetism.

(Evaluation No. 4)

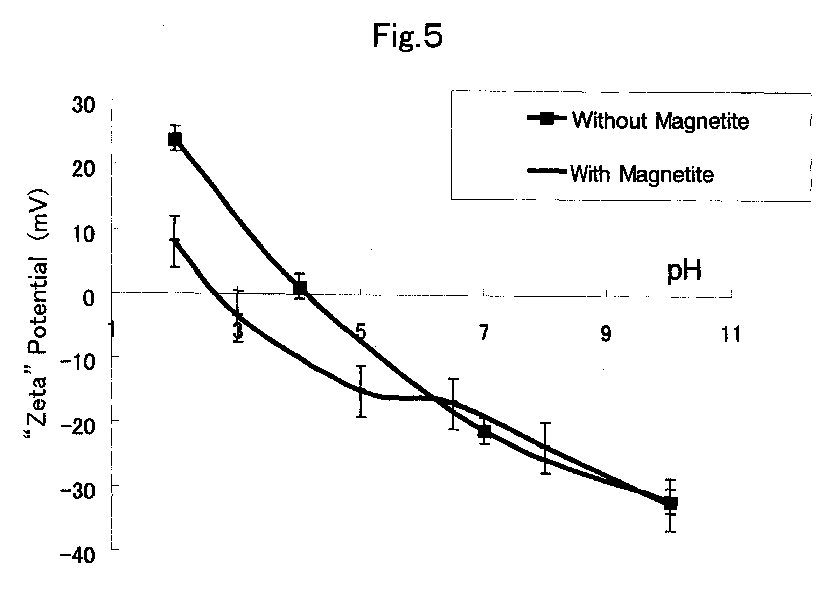

Results of measuring "Zeta" potentials (or superficial potentials) by means of electrophonetic light scattering spectrophotometer for the magnetic chemical absorbent that is directed to Example No. 1 and the simple-substance schwertmannite that is directed to Comparative Example No. 1 are illustrated in Fig. 5. Note that, in Fig. 5, one that is labeled with "With Magnetite" is the measurement result of "Zeta" potential on the magnetic chemical absorbent that is directed to Example No. 1, and another one that is labeled with "Without Magnetite" is the measurement result of "Zeta" potential on the simple-substance schwertmannite that is directed to Comparative Example No. 1.

It is seen from Fig. 5 that, in the area of pH being 6 or less, a difference was present between the magnetic chemical absorbent that is directed to Example No. 1 and the simple-substance schwertmannite that is directed to Comparative Example No. 1 in the "Zeta" potentials.

Hence, it appears that the magnetic chemical absorbent that is directed to Example No. 1 is a novel substance that is distinct from conventional schwertmannite, and the like, because of the fact that all of the superficial form, magnetic characteristic and "Zeta" potential differed from those of the simple-substance schwertmannite that is directed to Comparative Example No. 1, according to said Evaluation Nos. 1, 3 and 4 whose evaluation results are shown in Figs. 1, 2, 4 and 5.

(Evaluation No. 5)

The magnetic chemical absorbent that is directed to Example No. 1 was examined for the Cr absorption capacity by means of carrying out model analysis based on adsorption isotherm model. As a result, it was ascertained that the Cr absorption capacity was 120 mg/g, which was greater by a factor of twofold or more at least compared with that of activated carbon that has been known to be an absorbent with a great Cr absorption capacity even among existing absorbents.

(Evaluation No. 6)

The magnetic chemical absorbent that is directed to Example No. 1 was examined for the Cr absorption.

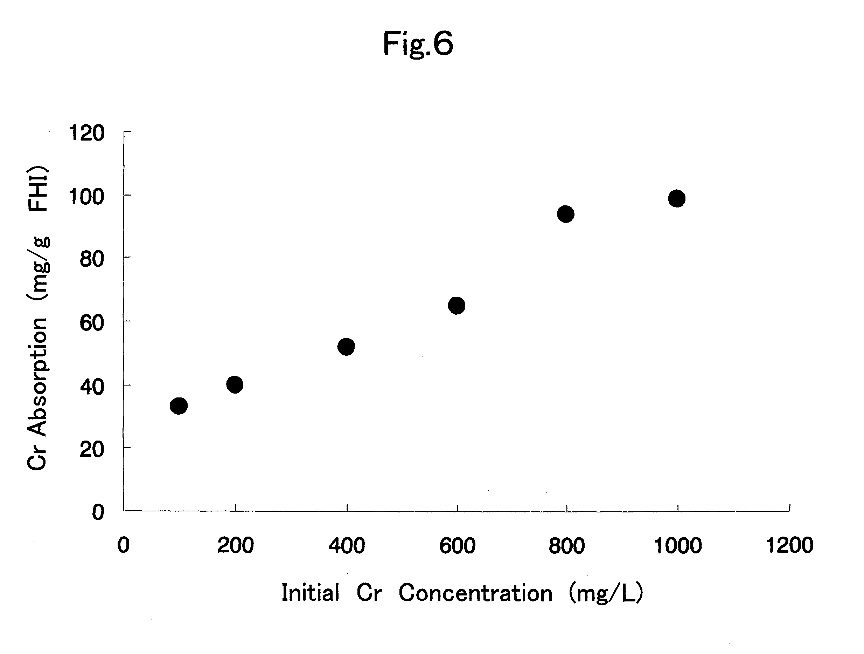

Specifically, the magnetic chemical absorbent that is directed to Example No. 1 was added to waste liquids whose initial Cr concentrations differed one another in an addition proportion of 1 g/L, and was then stirred for 3 hours. And, the waste liquids after removing the solid contents with paper filter were measured for the Cr concentrations in the liquids by means of ICP (inductively-coupled plasma analysis), and the Cr absorptions were calculated from their measurement results. The results are illustrated in Fig. 6.

As can be seen from Fig. 6, the Cr absorptions, which resulted from the magnetic chemical absorbent that is directed to Example No. 1, increased in proportion to the increase of the initial Cr concentrations virtually.

(Evaluation No. 7)

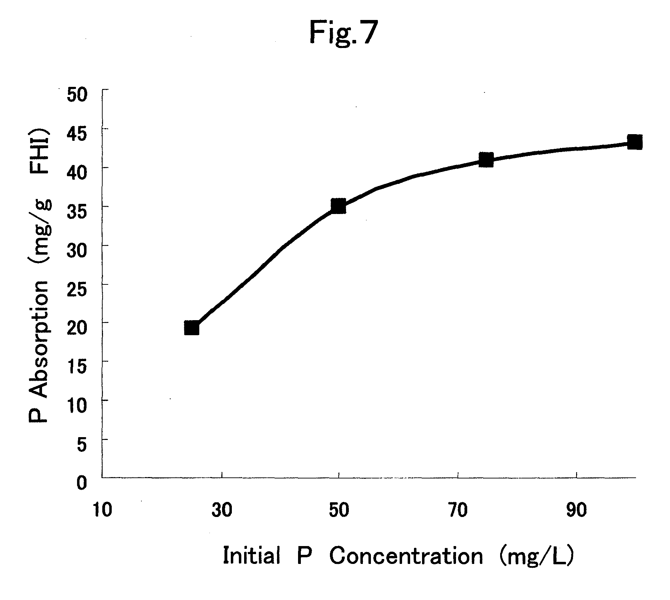

The magnetic chemical absorbent that is directed to Example No. 1 was examined for the P (phosphorous) absorption in the same manner as said Evaluation No. 6. The results are illustrated in Fig. 7.

As can be seen from Fig. 7, the P absorptions, which resulted from the magnetic chemical absorbent that is directed to Example No. 1, increased as being accompanied by the increase of the initial P concentrations.

(Evaluation No. 8)

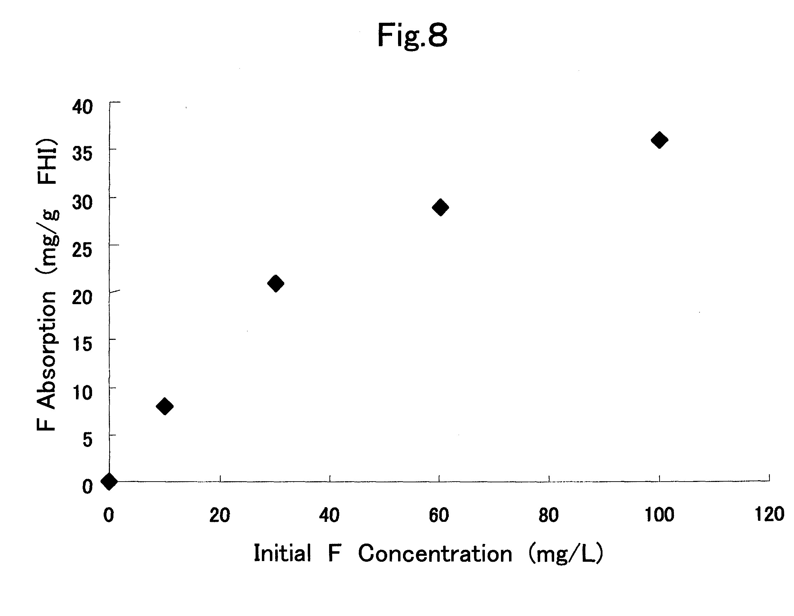

The magnetic chemical absorbent that is directed to Example No. 1 was examined for the F (fluorine) absorption in the same manner as said Evaluation No. 6. The results are illustrated in Fig. 8.

As can be seen from Fig. 8, the F absorptions, which resulted from the magnetic chemical absorbent that is directed to Example No. 1, increased as being accompanied by the increase of the initial F concentrations.

(Evaluation No. 9)

The magnetic chemical absorbent that is directed to Example No. 1 was examined for the influence of pH that was exerted upon the Cr absorption.

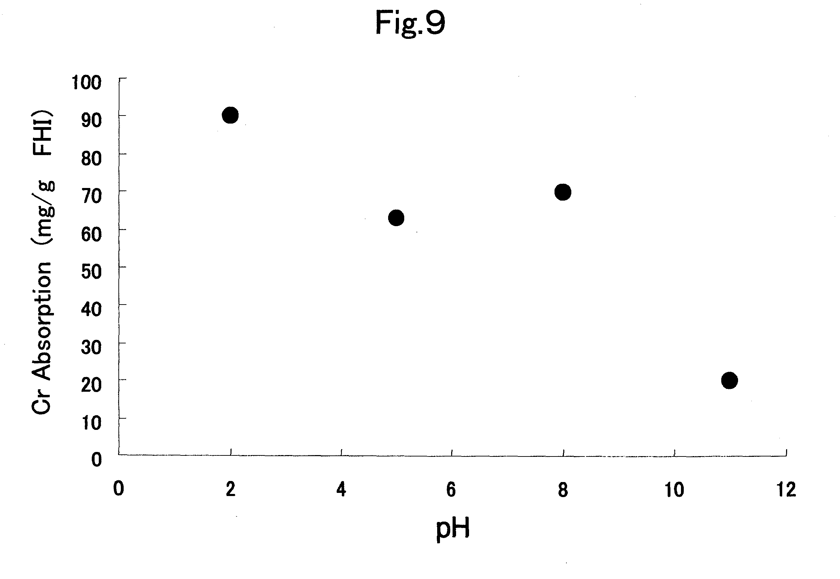

Specifically, the magnetic chemical absorbent that is directed to Example No. 1 was added to waste liquids whose initial Cr concentration was 600 mg/L and whose pHs were 2-11 in an addition proportion of 1 g/L, and was then stirred for 3 hours. And, the waste liquids after removing the solid contents with paper filter were measured for the Cr concentrations in the liquids by means of ICP, and the Cr absorptions were calculated from their measurement results. The results are illustrated in Fig. 9.

As can be seen from Fig. 9, in the range of the pH being 2-11, the Cr absorption became maximum when the pH was 2, and the Cr absorption became minimum when the pH was 11. Moreover, in the range of the pH being 2-11, it is understood that the Cr absorptions did not decrease monotonously as the pHs increased, but that the Cr absorptions increased temporarily in the vicinity at around the neutral point of the pH being 7.

From these results, it is understood that it is desirable to make use of the magnetic chemical absorbent that is directed to Example No. 1 under such a condition that the pH is 9 or less.

(Evaluation No. 10)

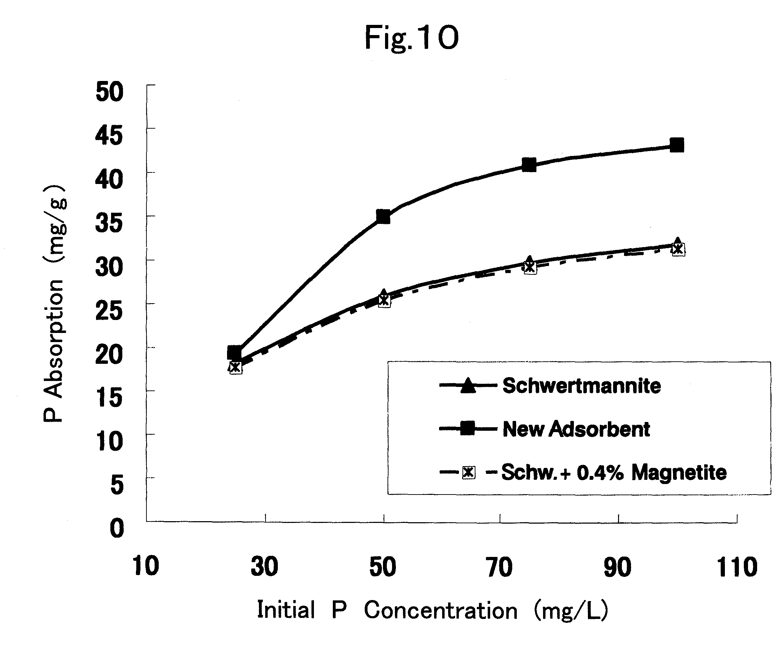

The magnetic chemical absorbent that is directed to Example No. 1, the simple-substance schwertmannite that is directed to Comparative Example No. 1, and the mixture of the simple-substance schwertmannite and magnetite powder that is directed to Comparative Example No. 2 were examined for the P absorptions in the same manner as said Evaluation No. 6. The results are illustrated in Fig. 10. Note that, in Fig. 10, one that is labeled with "Schwertmannite" is the P absorptions of the simple-substance schwertmannite that is directed to Comparative Example No. 1, another one that is labeled with "New Adsorbent" is the P absorptions of the magnetic chemical absorbent that is directed to Example No. 1, and still another one that is labeled with "Schw.+0.4% Magnetite" is the P absorptions of the mixture that is directed to Comparative Example No. 2.

As can be seen from Fig. 10, the P absorptions of the mixture that is directed to Comparative Example No. 2 in which the magnetite powder was simply mixed with the simple-substance schwertmannite were the same as the P absorptions of the simple-substance schwertmannite that is directed to Comparative Example No. 1 virtually. On the contrary, the P absorptions of the magnetic chemical absorbent that is directed to Example No. 1 in which the magnetite fine particles were composited with the schwertmannite enlarged considerably compared with those of Comparative Example No. 1 and Comparative Example No. 2.

(Evaluation No. 11)

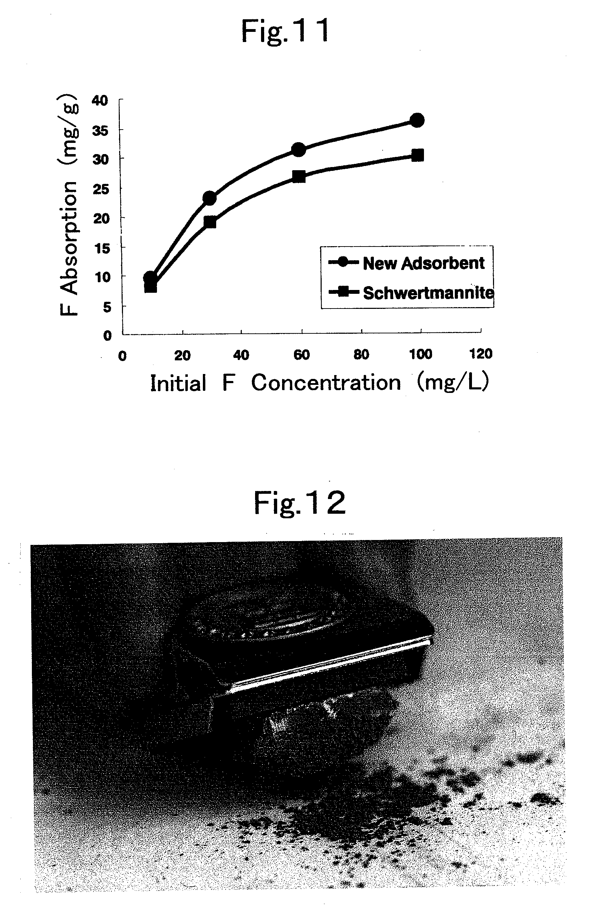

The magnetic chemical absorbent that is directed to Example No. 1, and the simple-substance schwertmannite that is directed to Comparative Example No. 1 were examined for the F absorptions in the same manner as said Evaluation No. 6. The results are illustrated in Fig. 11. Note that, in Fig. 11, one that is labeled with "New Adsorbent" is the F absorptions of the magnetic chemical absorbent that is directed to Example No. 1, and another one that is labeled with "Schwertmannite" is the F absorptions of the simple-substance schwertmannite that is directed to Comparative Example No. 1.

As can be seen from Fig. 11, the F absorptions of the magnetic chemical absorbent that is directed to Example No. 1 enlarged considerably compared with the F absorptions of the simple-substance schwertmannite that is directed to Comparative Example No. 1.

Thus, it appears that the magnetic chemical absorbent that is directed to Example No. 1 is a novel substance that is distinct from conventional schwertmannite, and the like, because of the fact that the P absorption capacity and F absorption capacity are upgraded more than those of the simple-substance schwertmannite that is directed to Comparative Example No. 1, and so forth.

(Evaluation No. 12)

Whether the magnetic chemical absorbent that was obtained in Example No. 1 possessed a ferromagnetic property or not was examined using a permanent magnet whose magnetic flux density on the magnetic-pole surfaces was 0.5 Tesla approximately. The result is shown in Fig. 12.

As can be apparent from Fig. 12, the magnetic chemical absorbent that was obtained in Example No. 1 possessed a ferromagnetic property, because it was strongly attracted onto the permanent magnet.

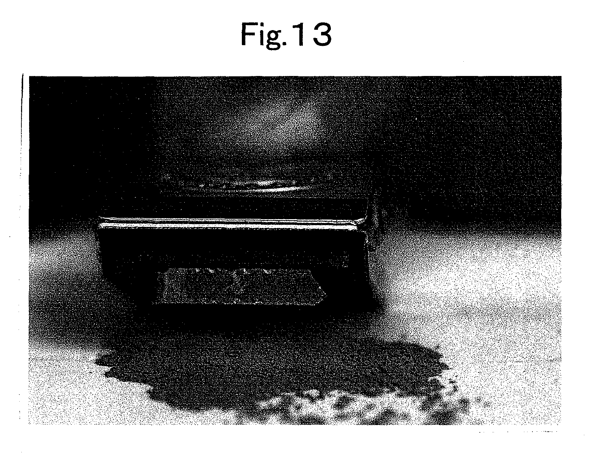

Note that, as a result of examining the simple-substance schwertmannite that was obtained in Comparative Example No. 1 as well using the same permanent magnet, the simple-substance schwertmannite that was obtained in Comparative Example No. 1 was not attracted onto the permanent magnet at all. The result is shown in Fig. 13.

Moreover, as a result of examining the mixture that was obtained in Comparative Example No. 2 as well, namely, the mixture of the simple-substance schwertmannite that was obtained in Comparative Example No. 1 and the magnetite powder (average particle diameter: 0.1 µm) (mass ratio of the magnetite powder with respect to the entire mixture: 0.4%), using the same permanent magnet, of the mixture that was obtained in Comparative Example No. 2, only the magnetite powder was attracted onto the permanent magnet. That is, the mixture that was obtained in Comparative Example No. 2 did not show ferromagnetism as a whole.

(Example No. 2)

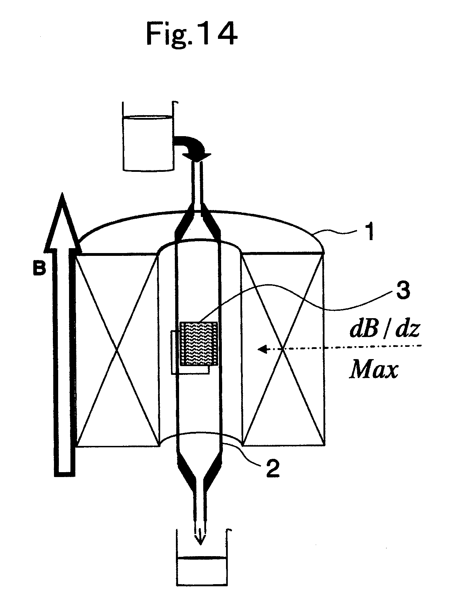

An experimental device being illustrated in a schematic diagram of Fig. 14 was made ready. In this experimental device, a glass tube 2 was disposed within an electric field 1 being directed from bottom toward top, and additionally a magnetic filter 3 comprising a ferromagnetic wire was disposed at a position that was within this glass tube 2, and at which the magnetic-field gradient was maximum.

And, while applying the magnetic field 1 with strengths given in Table 1, a 100-mL waste liquid in which the magnetic chemical absorbent that is directed to Example No. 1 was suspended was flowed into said glass tube 2 from above for 3-4 seconds, and was then passed through the magnetic filter 3 from the top toward the bottom. On this occasion, mass ratios of the magnetic chemical absorbent that could be separated from the waste liquid magnetically were examined. The results are given in Table 1.

For comparison, the simple-substance schwertmannite that was obtained in Comparative Example No. 1 was also examined in the same manner. The results are given in Table 1 all together.

**(TABLE 1)**

| | Magnetically-separable Rate | |
|---|---|---|
| Strength of Magnetic Field | Magnetic Chemical Absorbent (Ex. No. 1) | Simple-substance Schwertmannite (Comp. Ex. No. 1) |
| 0.4 | 96% | 65% |
| 0.5 | 99% or more | 72% |
| 0.75 | 99% or more | 85% |
| 1 | 99% or more | 99% or more |

As given in Table 1, it was possible to magnetically separate 99% or more of the magnetic chemical absorbent, which was included in the waste liquid, even if being 0.5 Tesla, which was a weak magnetic field compared with the magnetic fields that were required for magnetically separating schwertmannite, a paramagnetic substance, without ever using any auxiliary additive.

(Example No. 3)

The magnetic chemical absorbent that is directed to Example No. 1 was added to waste water whose initial P concentration was 20 mg/L and whose pH was 7 in an addition proportion of 1 g/L, and was then stirred for 3 hours, thereby having this magnetic chemical absorbent absorb P in the discharged water. On this occasion, upon examining the P absorption rate of the magnetic chemical absorbent that is directed to Example No. 1 in the brand-new state, it was 99.7% as given in Table 2.

Note that this P absorption rate was found by means of photometer.

And, by means of putting the magnetic chemical absorbent that is directed to Example No. 1, namely, the magnetic chemical absorbent that was saturated by means of the absorption of P, in a 0.05-mol/L sulfuric-acid aqueous solution and then stirring it for 10 minutes, this magnetic chemical absorbent was subjected to the first round of recycling treatment. Afterward, the after-recycling magnetic chemical absorbent was separated by means of filtration, and was then washed with deionized water in order to set a pH at 7, and was thereafter dried.

And, upon similarly examining the magnetic chemical absorbent after the first round of recycling treatment for the P absorption rate, it was 96.9% as given in Table 2.

Upon examining the magnetic chemical absorbent after the second round of recycling treatment for the P absorption rate in the same manner, it was 94.5% as given in Table 2.

**(TABLE 2)**

| | Brand-new Product | After 1st Round of Recycling Treatment | After 2nd Round of Recycling Treatment |
|---|---|---|---|
| P Absorption Rate | 99.7% | 96.9% | 94.5% |

Thus, in the magnetic chemical absorbent that is directed to present Example No. 1, the decrease of the P absorption rate fell within 5% even after carrying out the recycling treatment twice.

## Claims

1. A magnetic chemical absorbent being **characterized in that** it is provided with a composite being constituted of:
a core substance comprising magnetite fine particles; and
schwertmannite being precipitated around the core substance to chemically bond therewith.

2. The magnetic chemical absorbent as set forth in claim 1 being **characterized in that** the magnetic characteristic of said composite exhibits composite magnetism of ferromagnetism and paramagnetism.

3. The magnetic chemical absorbent as set forth in claim 1 or 2 being **characterized in that** a mass ratio of said core substance with respect to the entirety of said composite is 0.03-5%.

4. A production process for magnetic chemical absorbent, the production process being provided with a hydrolysis reaction step, which includes: a heating step of heating a solution of ferric salt; and a precipitation step of precipitating crystal of schwertmannite by means of hydrolysis reaction by adding a reactive substance to the solution being heated;
the production process being **characterized in that:**
the crystal of schwertmannite is precipitated around the magnetite fine particles in the precipitation step by means of adding magnetite fine particles into said solution after said solution is heated at said heating step and before the precipitation of said crystal begins at said precipitation step, thereby obtaining a composite, which is constituted of a core substance comprising the magnetite fine particles and schwertmannite being precipitated around the core substance to chemically bond therewith.

5. The production process for magnetic chemical absorbent as set forth in claim 4 being **characterized in that** an addition amount of said magnetite fine particles is 0.03-5% in a mass ratio with respect to the entirety of said composite.

6. The production process for magnetic chemical absorbent as set forth in claim 4 or 5 being **characterized in that** an average particle diameter of said magnetite fine particles is 10-1,000 nm.

7. The production process for magnetic chemical absorbent as set forth in either one of claims 4 through 6 being **characterized in that** said magnetite particles are added into the solution at said precipitation step before a color change of said solution occurs.

8. A waste-liquid treating method for removing at least one type of harmful ion, which can be absorbed by means of the magnetic chemical absorbent as set forth in claim 1 or 2, from a waste liquid including the harmful ion,
the waste-liquid treating method being **characterized in that** it is provided with:
an absorption step of adding said magnetic chemical absorbent to said waste liquid, thereby letting the magnetic chemical absorbent absorb said harmful ion chemically; and
a separation step of magnetically separating said magnetic chemical absorbent, which has absorbed said harmful ion chemically, from said waste liquid.

9. The waste-liquid treating method as set forth in claim 8, wherein a pH of said waste liquid is adjusted to 9 or less at said absorption step.

10. The waste-liquid treating method as set forth in claim 8 or 9, wherein said harmful ion is at least one member being selected from the group consisting of ions that are harmful to human body or environment, or the like, such as chromium ion, phosphoric-acid-based ion, fluoride ion, arsenic ion, selenic ion, antimonic ion and uranic ion, and the other heavy-metal ions.

11. The waste-liquid treating method as set forth in either one of claims 8 through 10, wherein said magnetic chemical absorbent that has absorbed said harmful ion is separated magnetically by means of a magnetic field with 0.1-0.5 Tesla at said separation step.

12. The waste-liquid treating method as set forth in either one of claims 8 through 11, wherein said harmful ion is absorbed onto said magnetic chemical absorbent in a fixation layer in which said waste liquid is in a fixation state at said absorption step.

13. The waste-liquid treating method as set forth in either one of claims 8 through 11, wherein said harmful ion is absorbed onto said magnetic chemical absorbent in a fluidized layer in which said waste liquid is in a fluidized state at said absorption step.

14. The waste-liquid treating method as set forth in either one of claims 8 through 13, wherein said magnetic chemical absorbent that has absorbed said harmful ion is subjected to solid-liquid separation in a fixation layer in which said waste liquid is in a fixation state at said separation step.

15. The waste-liquid treating method as set forth in either one of claims 8 through 13, wherein said magnetic chemical absorbent that has absorbed said harmful ion is subjected to solid-liquid separation in a fluidized layer in which said waste liquid is in a fluidized state at said separation step.

16. A recycling method for magnetic chemical absorbent, the recycling method being **characterized in that** the magnetic chemical absorbent, which has chemically absorbed at least one type of harmful ion that can be absorbed by means of the magnetic chemical absorbent as set forth in claim 1 or 2, is treated with a sulfuric-acid aqueous solution, thereby substituting sulfuric ion for the harmful ion that has been absorbed chemically onto the magnetic chemical absorbent.

17. The recycling method for magnetic chemical absorbent as set forth in claim 16, wherein a concentration of said sulfuric-acid aqueous solution is 0.01-0.2 mol/L.

18. A magnetic chemical absorbent being **characterized in that** it is provided with a composite being constituted of: a core substance comprising magnetite fine particles; and an iron-sulfate compound being precipitated around the core substance to chemically bond therewith.

19. The magnetic chemical absorbent as set forth in claim 18 being **characterized in that** said iron-sulfate compound is one member being selected from the group consisting of jarosite and goethite.
